# EUROPEAN PATENT APPLICATION

(11) **EP 2 981 009 A1**
(43) Date of publication of application: **03.02.2016**
(21) Application number: 14290222.0
(22) Date of filing: 31.07.2014
(51) Int. Cl.: H04J 3/14, H04J 3/16, H04B 10/032, H04Q 11/00

(54) **Method to operate a network unit and network unit**

(71) Applicant: ALCATEL LUCENT, 92100 Boulogne-Billancourt (FR)
(72) Inventor: Hessler, Peter, 90411 Nürnberg (DE)
(74) Representative: DREISS Patentanwälte PartG mbB

(57) **Abstract**

It is proposed a method to operate a network unit. APS, automatic protection switching channel comprising APS values for the network node as received. In a first step. (2) a previously accepted APS value of the APS channel is maintained in dependence on an active hold signal. In a second step (4) a new APS value is accepted replacing the previously accepted APS value in dependence on the determination of a persistency of a received APS value.

## Description

### Field of the invention

The invention relates to a method to operate a network node and a network node.

### Background

The APS, Automatic Protection Switch, channel is carried over the first three bytes of the APS/PCC, Protection Communication channel, field of an ODUk, Optical Channel Data Unit, overhead and is used to carry information between two ends of a linear protection group to coordinate the head end bridge with the tail end selector for 1:n protection, and to coordinate the selectors in both directions in the case of bidirectional protection. The fourth byte of the APS/PCC field is reserved. However, various protection schemes are addressed by this disclosure. Eight independent APS channels are available to support protection.

### Summary

In view of the prior art, it is an object of the disclosure to improve switching times by simultaneously improve the reliability of a protection switch. A method to operate a network node is proposed. An APS, Automatic Protection Switching, channel comprising APS values for the network node is received by the network unit. In a first step a previously accepted APS value of the APS channel is maintained in dependence on an active hold signal. In a second step a new APS value is accepted replacing the previously accepted APS value in dependence on a determination of a validity of a received APS value. By maintaining the previously accepted APS value depending on the hold signal, the hold signal advantageously prevents a false interpretation of received APS values. The present disclosure therefore preserves APS channel integrity during ODUk frame slips.

Especially frame slips may lead to problems in protection switching. An ODUk, Optical Channel Data Unit-k, frame slip comprises a difference in time between the actual ODUk frame start reception and the expected ODUk frame start reception. With respect to an APS, Automatic Protection Switching, channel the frame slip causes the receiving network entity to access the APS channel at the expected position leading to wrong APS values and to wrong APS decisions of the network entity as the expected position of the APS channel provides other data.

ODUk frame slips can have a variety of sources as outlined in the following. Frame slips may have their origins in the upstream network, for example by an insertion of an ODUk maintenance signal with a new frame start position in an upstream network element, or the replacement of an ODUk maintenance signal by an ODUk with another payload signal leading to another frame start position for example due to a different route through the upstream network. Furthermore, frame slips may have their origins by protection activities, for example by a bridging function regarding an ODUk SNCP, Sub-Network Connection Protection; these frame slips may be caused by bridging of a normal traffic signal to protection replacing the null signal or an extra traffic signal or another normal traffic signal with a different frame start position, or may be caused by re-establishing the null signal or an extra traffic signal on the protection transport entity.

Because of a wrong access and a resulting wrong interpretation of the ODUk overhead and/or a TCM, tandem connection monitoring, overhead an ODUk frame slip may cause a SF, Signal Fail, signal, which is a trigger for the protection transport entity to release a current protection switch.

The ODUk frame slip may therefore lead to an unnecessary transient drop of a normal traffic signal as a wrongly interpreted higher priority protection request is accepted at a network node. Also extra traffic signals may be transiently dropped.

Without the method presented in this disclosure a frame slip therefore leads to heavy delays in the setup of a switch and/or protection switch as additional protocol interactions are necessary. For example, even protocol oscillations may occur if the frame slip results from bridging of the signal to be protected

An incoming alignment error, IAE, is defined to allow a network unit to inform its peer downstream network unit that an upstream alignment error has been detected. The downstream node may use this information to suppress the counting of bit errors, which may occur as a result of a frame phase change of the OTUk, Optical Channel Transport Unit-k, at the ingress of the respective section. However, the present disclosure is not related to a method to compensate the effects on performance monitoring and but on network protection.

In an advantageous embodiment the active hold signal comprises the reception of an active Signal Fail, SF, signal for the entity transporting the APS channel.

In an advantageous embodiment the active hold signal comprises a failed recognition of an expected pattern in the received APS values.

In an advantageous embodiment the validity of the APS value is determined in dependence on a recognition of an expected pattern in the APS channel.

In an advantageous embodiment the validity of the APS value is determined in dependence on a determination of a plurality of identical APS values in consecutive multi-frames of the APS channel. Consecutive APS values are received in consecutive multi-frames.

In an advantageous embodiment the expected pattern comprises a changing value, which changes between consecutive received APS values according to a pre-defined scheme, and wherein the changing value is recognized in the received APS values as expected to the pre-defined scheme.

In an advantageous embodiment the expected pattern comprises a checksum over at least a part of the APS values.

In an advantageous embodiment the expected pattern comprises a fixed pattern.

In an advantageous embodiment the fixed pattern comprises an identification of the present node and/or comprises an identification of an upstream node.

In an advantageous embodiment the expected pattern is located in the fourth APS byte of the APS channel.

In an advantageous embodiment a permanent absence of the expected pattern is determined, and wherein the recognition of the expected pattern is disabled

In an advantageous embodiment the SF signal is accepted in dependence on a detection of a persistency of a plurality of received samples of SF signals.

In an advantageous embodiment the persistency of a plurality of APS values is determined in dependence on the recognition identical APS values in each of plurality of consecutive multi-frames in the APS channel.

### Brief description of the figures

- Figure 1: is a schematic depiction of a flow diagram of a method to operate a network unit;
- Figure 2: is a schematic depiction of a protection scheme; and
- Figure 3: is a schematic depiction of a block diagram of the method to operate a network unit.

### Description of the embodiments

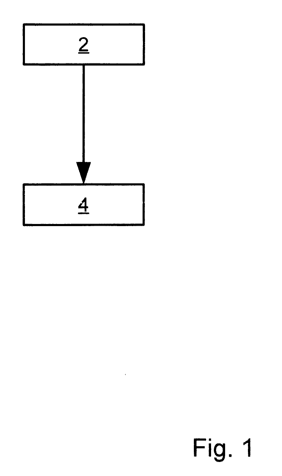

Figure 1 shows a schematic depiction of a flow diagram of a method to operate a network unit of an OTN, optical transport network, wherein an APS, automatic protection switching, channel comprising APS values is received. In a first step 2 the previously accepted APS value of the APS channel is maintained in dependence on an active hold signal. In the second step 4 a new APS value is accepted replacing the previously accepted APS value in dependence on the determination of a validity of a received APS value.

In an embodiment the validity may comprise a persistency of a received APS value, the persistency being determined by a persistency filter which detects or determines the persistency of a respective APS value by the reception of a certain number of identical APS values received. The APS values are received via the ODUk overhead.

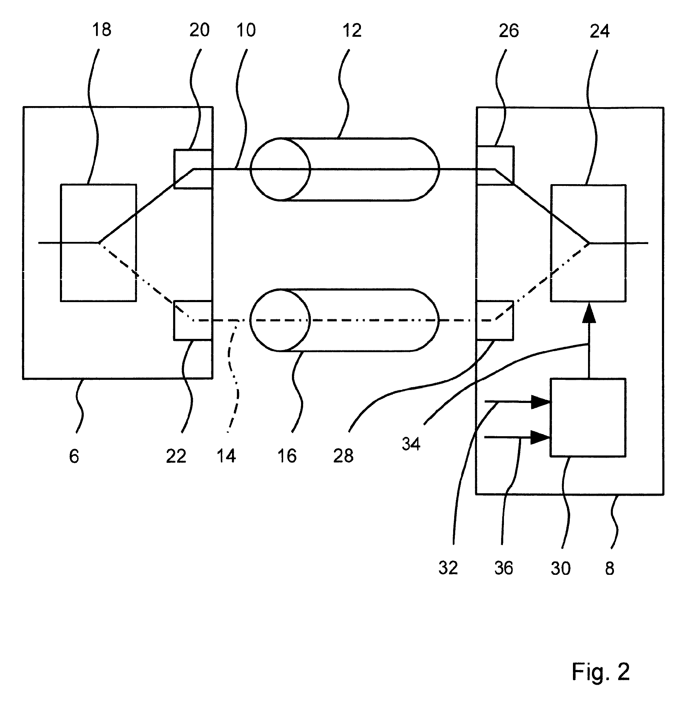

Figure 2 shows a schematic depiction of a protection scheme which comprises at least a first node 6 and a second node 8. The first node 6 is connected to the second node 8 via a working path 10 of a working entity 12 and furthermore the first node 6 is connected with the second node 8 via a protection path 14 of a protection entity 16.

The first node 6 comprises a selector 18 and two interfaces 20, 22. The second node 8 comprises a selector or bridge 24 and two interfaces 26, 28. The selectors or bridges 18 and 24 are shown in an embodiment only addressing the working entity 12 and the protection entity 16. Nevertheless, the selectors or bridges 18 and 24 may comprise further selection means or bridging means to further interfaces therefore providing support for further protection schemes like Shared Mesh Protection, SMP. In that sense, the present disclosure, especially figure 2, only exemplifies the application of the present disclosure. So, the present disclosure may be applied to a variety of protection schemes. The second node 8 comprises a control unit 30 which receives an APS channel 32 and a Signal Fail, SF, signal 36 and controls the selector or bridge 24 via a control signal 34. The SF signal 36 is also referenced as SF indication.

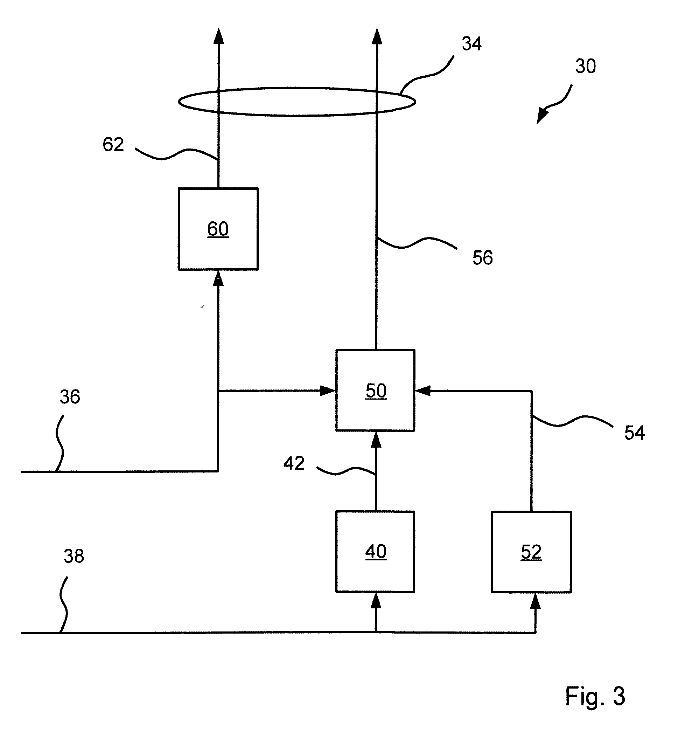

Figure 3 shows a schematic depiction of a block diagram of the method to operate the network unit 8. Particularly, the block diagram of figure 3 represents a method to operate the control unit 30 of the network unit 8. The APS channel 32 received by the control unit 30 comprises the signal fail, SF, signal 36 and an APS value 38. Examples for the APS value 38 are the protection type, the requested signal and/or the bridged signal.

A received APS value 38 is applied to an APS value persistency filter 40, which determines the persistency of an APS value 38 in dependence of the determination of a plurality of identical APS values 38 received in consecutive multi-frames of the APS channel. Consecutive multi-frames are frames which are directed to a respective independent APS channel of a plurality of APS channels, the consecutive multi-frames being expected by respective receiving network unit 8 every n-th frame.

In dependence of the determination of the persistency of an APS value 38 the persistency filter 40 applies a respective persistent APS value 42 to an acceptance filter 50. The received APS values 38 are applied to a pattern filter 52. In dependence on the received APS values 38 the pattern filter 52 determines a first hold signal 54 which is applied to the acceptance filter 50. The received SF signal 36 is applied to the acceptance filter 50 and is also referenced to as a second hold signal. In dependence on the inactive first hold signal 54 and/or in dependence on the inactive second hold signal 36 the acceptance filter 50 forwards the APS value 42 as an accepted APS value 56.

The SF signal 36 is applied to a signal fail persistency filter 60, which determines an accepted SF signal 62 in dependence on a plurality of receptions of an identical SF signal 36. The accepted SF signal 62 and the accepted APS value 56 are part of the control signal 34 of figure 2.

In an embodiment the acceptance filter 50 does not accept the applied APS value 42 when receiving an active hold signal in form of an active SF signal 36.

In an embodiment the acceptance filter 50 does not accept the applied APS value 42 when an active hold signal 62 is applied to the acceptance filter 50. Therefore the accepted SF signal 62 is also referred to as a second hold signal. When the applied APS value 42 is not accepted, the acceptance filter 50 still forwards the last accepted value 56.

In an embodiment the first hold signal 54 is determined as active when the pattern filter 52 fails to recognize an expected pattern in the received APS values 38. The pattern filter may comprise a pattern persistency filter regarding the expected pattern, wherein a positive recognition is only determined after a plurality of positive recognitions of the expected pattern in the received APS values 38.

The expected pattern may comprise a fixed pattern, for example comprising an identification of the present node 8 and/or comprising an identification of an upstream node 6.

In an embodiment the expected pattern may comprise a checksum over at least a part of the received APS values.

In an embodiment the expected pattern may comprise a changing value, which changes between consecutive received APS values according to a pre-defined scheme. The changing value is recognized in the received APS values 38 as expected to the pre-defined scheme. The pre-defined scheme may comprise an increment or decrement of a changing value. In an embodiment a 3-bit pattern of the received value 38 may be objected according to the pre-defined scheme to a modular 8 operation which results in a value which is expected to be incremented with respect to the previous value or zero. In other words the received changing values differs in at least one instance from the previously received changing value in the previously received multi-frame by a number of one or the received changing value is zero. Consecutive multi-frames span a plurality of frames and differ from each other by a multi-frame time tick, which increments by one with each APS multi-frame.

In an embodiment the expected pattern is located only in the fourth APS byte of the APS channel 32.

In an embodiment the expected pattern is located within ODUk overhead bytes in form of a coding scheme.

In an embodiment a permanent absence of the expected pattern is determined and the recognition of the expected pattern according to the pattern filter 52 is disabled which advantageously provide to maintain compatibility with equipment not supporting the functions of the pattern filter 52.

In an embodiment the APS value 38 is only accepted as a value 56 when both the first hold signal 54 and the second hold signal 36, 62 become inactive.

In an exemplary embodiment it is provided a 5 bit fixed pattern in the fourth APS byte together with a 3 bit counter. The 5 bit fixed pattern identifies the node 8 and therefore the network unit 8 may identify itself or may identify that the respective received APS values are not intended for the network unit 8. The 3 bit counter works according to the previously mentioned embodiment regarding the modular 8 operation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method to operate a network node (8), wherein an APS, Automatic Protection Switching, channel (32) comprising APS values (38) is received, wherein in a first step (2) a previously accepted APS value (56) of the APS channel (38) is maintained in dependence on an active hold signal (54, 36, 62), and wherein in a second step (4) a new APS value (42) is accepted replacing the previously accepted APS value (56) in dependence on a determination of a validity of a received APS value (38).

2. The method of claim 1, wherein the active hold signal (36) comprises the reception of an active Signal Fail, SF, signal (36).

3. The method of claim 1 or 2, wherein the active hold signal (54) comprises a failed recognition of an expected pattern in the received APS values (38).

4. The method according to one of the preceding claims, wherein the validity of the APS value (38) is determined in dependence on a positive recognition of an expected pattern in the APS channel (32).

5. The method according to one of the preceding claims, wherein the validity of the APS value (38) is determined in dependence on a determination of a plurality of identical APS values (38) in consecutive multi-frames of the APS channel (32).

6. The method according to one of the claims 3 to 5, wherein the expected pattern comprises a changing value, which changes between consecutive received APS values (38) according to a pre-defined scheme, and wherein the changing value is recognized in the received APS values (38) as expected to the pre-defined scheme.

7. The method according to one of the claims 3 to 6, wherein the expected pattern comprises a checksum over at least a part of the APS values (38).

8. The method according to one of the claims 3 to 7, wherein the expected pattern comprises a fixed pattern.

9. The method of claim 8, wherein the fixed pattern comprises an identification of the present node (8) and/or comprises an identification of an upstream node (6).

10. The method according to one of the claims 3 to 9, wherein the expected pattern is located in the fourth APS byte of the APS channel (32).

11. The method according to one of the claims 3 to 10, wherein a permanent absence of the expected pattern is determined, and wherein the recognition of the expected pattern is disabled

12. The method according to one of the preceding claims, wherein the SF signal (62) is accepted in dependence on a detection of a persistency of a plurality of received SF signals (36).

13. The method according to one of the preceding claims, wherein the persistency of a plurality of APS values (38) is determined in dependence on the recognition identical APS values (38) in each of plurality of consecutive multi-frames in the APS channel (32).

14. A network node (8) operable to receive an APS, Automatic Protection Switching, channel (32) comprising APS values (38), operable to maintain in a first step (2) a previously accepted APS value (56) of the APS channel (32) in dependence on an active hold signal (54; 36; 62), and operable to in a second step (4) accept a new APS value (42) replacing the previously accepted APS value (56) in dependence on a determination of a validity of a received APS value (38).

15. The network node (8) of the previous claim operable to carry out the method according to one of the claims 1 to 13.

## Amended claims

### Amended claims in accordance with Rule 137(2) EPC.

1. A method to operate a network node (8), wherein an APS, Automatic Protection Switching, channel (32) comprising APS values (38) is received by the network unit (8), wherein in a first step (2) of the method a previously accepted APS value (56) of the APS channel (38) is maintained in dependence on an active hold signal (54, 36, 62), and wherein in a second step (4) of the method a new APS value (42) is accepted replacing the previously accepted APS value (56) in dependence on a determination of a validity of a received APS value (38).

2. The method of claim 1, wherein the active hold signal (36) comprises the reception of an active Signal Fail, SF, signal (36).

3. The method of claim 1 or 2, wherein the active hold signal (54) comprises a failed recognition of an expected pattern in the received APS values (38).

4. The method according to one of the preceding claims,
wherein the validity of the APS value (38) is determined in dependence on a positive recognition of an expected pattern in the APS channel (32).

5. The method according to one of the preceding claims,
wherein the validity of the APS value (38) is determined in dependence on a determination of a plurality of identical APS values (38) in consecutive multi-frames of the APS channel (32).

6. The method according to one of the claims 3 to 5,
wherein the expected pattern comprises a changing value, which changes between consecutive received APS values (38) according to a pre-defined scheme, and wherein the changing value is recognized in the received APS values (38) as expected to the pre-defined scheme.

7. The method according to one of the claims 3 to 6,
wherein the expected pattern comprises a checksum over at least a part of the APS values (38).

8. The method according to one of the claims 3 to 7,
wherein the expected pattern comprises a fixed pattern.

9. The method of claim 8, wherein the fixed pattern comprises an identification of the present node (8) and/or comprises an identification of an upstream node (6).

10. The method according to one of the claims 3 to 9,
wherein the expected pattern is located in the fourth APS byte of the APS channel (32).

11. The method according to one of the claims 3 to 10,
wherein a permanent absence of the expected pattern is determined, and wherein the recognition of the expected pattern is disabled

12. The method according to one of the preceding claims,
wherein the SF signal (62) is accepted in dependence on a detection of a persistency of a plurality of received SF signals (36).

13. The method according to one of the preceding claims,
wherein the persistency of a plurality of APS values (38) is determined in dependence on the recognition identical APS values (38) in each of plurality of consecutive multi-frames in the APS channel (32).

14. A network node (8) operable to receive an APS, Automatic Protection Switching, channel (32) comprising APS values (38), operable to maintain in a first step (2) a previously accepted APS value (56) of the APS channel (32) in dependence on an active hold signal (54; 36; 62), and operable to in a second step (4) accept a new APS value (42) replacing the previously accepted APS value (56) in dependence on a determination of a validity of a received APS value (38).

15. The network node (8) of the previous claim operable to carry out the method according to one of the claims 1 to 13.
